Europäisches Patentamt

European Patent Office

Office européen des brevets

(11) Veröffentlichungsnummer: **0 248 106**
**A2**

## (12) EUROPÄISCHE PATENTANMELDUNG

(21) Anmeldenummer: **86110280.4**

(22) Anmeldetag: **25.07.86**

(51) Int. Cl.⁴: **B29C 45/16**

(30) Priorität: **03.06.86 DE 3618616**

(43) Veröffentlichungstag der Anmeldung:
**09.12.87 Patentblatt 87/50**

(84) Benannte Vertragsstaaten:
**AT CH DE FR IT LI**

(71) Anmelder: **Battenfeld Maschinenfabriken GmbH**
**Scherl 10 Postfach 1164/1165**
**D-5882 Meinerzhagen 1(DE)**

(72) Erfinder: **Eckardt, Helmut, Dipl.-Ing.**
**Goethestrasse 18**
**D-5882 Meinerzhagen 1(DE)**

(74) Vertreter: **Müller, Gerd et al**
**Patentanwälte**
**HEMMERICH-MÜLLER-GROSSE-POLLMEIER--**
**MEY Hammerstrasse 2**
**D-5900 Siegen 1(DE)**

(54) **Spritzdüse zur Herstellung von Formteilen aus drei verschiedenen Kunststoffkomponenten.**

(57) Eine Spritzdüse I zur Herstellung von Formteilen aus drei verschiedenen Kunststoffkomponenten, bei welcher die Zuführkanäle für jede der Kunststoffkomponenten vor dem Düsenmundstück 4 durch Düsenverschlüsse beeinflußt werden kann, erhält eine baulich einfache und räumlich kleine Schiebersteuerung 5, 6, die ein exaktes Umschalten von einer auf die andere Kunststoffkomponente sowie eine schnelle Reaktion ermöglicht. Es wird dabei in einer Flachkammer 5 ein Flachschieber 6 benutzt, die sich unmittelbar rückseitig an die das Düsenmundstück 4 enthaltende Platte 3 anschließen können. Die die Zufuhr der Kunststoffkomponenten steuernden Wirkflächen der Flachkammer 5 und des Flachschiebers 6 liegen dabei auf Ebenen, die miteinander ein Dreieck einschließen. In einer einzigen Bewegungsebene kann daher der Flachschieber in drei verschiedene Schaltstellungen gebracht werden, wobei jede derselben immer nur einen Zuführkanal freigibt, jedoch zugleich zwei Zuführkanäle absperrt.

Fig. 1

## Spritzdüse zur Herstellung von Formteilen aus drei verschiedenen Kunststoffkomponenten

Die Erfindung betrifft eine Spritzdüse zur Herstellung von Formteilen aus drei verschiedenen Kunststoffkomponenten, bei welcher die Zuführkanäle für jede der Kunststoffkomponenten vor dem Düsenmundstück durch Düsenverschlüsse beeinflußbar sind.

Für die Herstellung von Kunststoff-Formteilen, die Barriereeigenschaften haben müssen, ist es meist unumgänglich, mit drei verschiedenen Kunststoffmaterialien zu arbeiten, weil sonst eine optimale Verbindung des die eigentliche Haut bildenden Kunststoffmaterials mit dem die Barriereschicht bildenden Kunststoffmaterial nicht errreicht wird. Das dritte Kunststoffmaterial wirkt in einem solchen Falle als sogenannter Haftvermittler, welcher die an und für sich nicht verbindungswilligen Kunststoffkomponenten unter Bildung einer Zwischenschicht sicher zusammenhält.

Bei der Herstellung derartiger Formteile ist es in der Regel von wesentlicher Bedeutung, daß der Spritzvorgang relativ schnell abläuft und daß dabei auch kleine Formteile mit guter Qualität gefertigt werden können.

Eine Spritzdüse zur Herstellung solcher Formteile muß daher eine ganze Reihe verschiedener Bedingungen erfüllen. Es sind dies

-"kleine Volumina der Düse"
-geringe Baugröße
-exaktes Umschalten von der einen auf eine andere Kunststoffkomponente,
-sehr schnelle Reaktion,
-kostengünstige Bereitstellung.

Bekannte Spritzdüsen, welche bspw. mit ineinanderlaufenden, konzentrischen Düsenverschlüssen arbeiten und die sich für viele Anwendungsfälle in der Praxis bestens bewährt haben, sind jedoch für den anmeldegmäß vorgesehenen Einsatzzweck nicht sonderlich geeignet, weil sie die eben genannten Bedingungen nicht erfüllen.

Der Erfindung liegt deshalb die Aufgabe zugrunde, eine Spritzdüse der eingangs spezifizierten Gattung zu schaffen, die bei geringer Baugröße und geringem Füllvolumen bis zum Düsenmundstück hin auf einfache Weise gewährleistet, daß im geöffneten Zustand des Zuführkanals für eine Kunststoffkomponente die Zuführkanäle jeweils für die beiden anderen Kunststoffkomponenten abgesperrt sind und dabei zugleich eine Drucksteuerung der Spritzdüse ermöglicht werden kann.

Erreicht wird dieses Ziel nach der Erfindung durch die Kennzeichnungsmerkmale des Anspruchs I, nämlich dadurch, daß die Zuführkanäle im Düsenkopf relativ zueinander an drei verschiedenen, im wesentlichen parallel zur Längsachse des Düsenmundstücks liegenden Wänden einer in ihrer Grundform etwa dreieckig begrenzten Kammer ausmünden, daß in der Kammer im wesentlichen quer zur Längsachse des Düsenmundstücks begrenzt verstellbar ein in seiner Grundform entsprechend gestalteter Schieber geführt ist, daß dieser Schieber in der Kammer relativ zu den Mündungen der Zuführkanäle in drei verschiedene Schaltstellungen bewegbar ist, von denen jede jeweils eine der Mündungen der Zuführkanäle freigibt, zugleich aber zwei andere Mündungen von Zuführkanälen verschließt, und daß am Schieber zu jedem der Zuführkanäle ein eigener Anschluß-bzw. Verbindungskanal ausgebildet ist, dessen eines Ende lediglich dann mit dem Düsenmundstück korrespondiert, wenn sein anderes Ende mit dem zugehörigen Zuführkanal in Verbindung gestellt ist.

Baulich besonders einfache und dabei mit geringem Einbauraum auskommende Mittel machen hier eine optimale Steuerung der Zufuhr der Kunststoffkomponenten zum Düsenmundstück möglich.

Als besonders vorteilhafte Weiterbildungsmaßnahme hat es sich bewährt, wenn nach Anspruch 2 die Kammer als Flachkammer und der Schieber als Flachschieber ausgeführt sind und sich unmittelbar rückseitig an das Düsenmundstück anschließen, wobei vorzugsweise das Flächenzentrum der Kammer mit der Längsachse des Düsenmundstücks fluchtet.

Nach Anspruch 3 ist es dabei erfindungsgemäß weiterhin möglich, daß die Anschluß-bzw. Verbindungskanäle unmittelbar in die dem Düsenmundstück zugewandte Stirnfläche des Schiebers eingeformt sind, wobei ihr äußeres Ende an einer Randkante des Schiebers in die Kammer ausmündet, während ihr inneres Ende einen dem Stellweg des Schiebers angepaßten Abstand vom Flächenzentrum des Schiebers aufweist.

Durch geeignete Ausführung der Anschluß-bzw. Verbindungskanäle an ihrem dem Düsenmundstück zugewendeten Ende ist es möglich, beim Umschalten von einer auf die andere Kunststoffkomponente eine gewisse Überlappung der Zuführung beider Kunststoffkomponenten zu erhalten und dadurch den Spritzvorgang zu optimieren.

Nach der Erfindung hat es sich weiterhin bewährt, wenn gemäß Anspruch 4 die Zuführkanäle in die Kammer in einer zur Verstellebene des Schiebers parallelen Ebene ausmünden, die gegenüber der dazu wiederum parallelen Mündungsebene der Anschluß-bzw. Verbindungskanäle im Schieber parallel versetzt ist, und daß dabei die Strömungsverbindung zwischen jedem Zuführkanal und dem zugehörigen Anschluß-bzw. Verbindungskanal über den vom Schieber freigebbaren Raum der Kammer herstellbar ist. Diese Maßnahmen stellen bei einem minimalen Einbauraum für die Kammer und den Schieber eine optimale Funktion der Spritzdüse dauerhaft sicher.

In baulicher Hinsicht hat es sich als besonders zweckmäßig herausgestellt, wenn gemäß Anspruch 5 die im wesentlichen parallel zur Längsachse des Düsenmundstücks gerichteten Begrenzungswandungen der Kammer auf Ebenen liegen, die miteinander ein gleichseitiges Dreieck einschließen. Nach Anspruch 6 besteht aber auch die Möglichkeit, daß diese Begrenzungswandungen miteinander ein ungleichseitiges Dreieck einschließen, während nach Anspruch 7 vorgesehen ist, daß von diesen Begrenzungswandungen ein ungleichschenkliges Dreieck eingeschlossen wird.

Nach Anspruch 8 können dabei die Kammer und der Schieber jeweils gerundete Ecken haben, wobei die Seitenlängen des Schiebers um dessen Verstellweg kürzer bemessen sind als die Seitenlängen der Kammer.

Eine andere Ausführungsform der erfindungsgemäßen Spritzdüse zeichnet sich nach Anspruch 9 dadurch aus, daß die Kammer und der Schieber jeweils hexagonförmig mit abwechselnd langen und kurzen Begrenzungsseiten gestaltet sind, wobei die drei langen Begrenzungsseiten des Schiebers jeweils um dessen Verstellweg kürzer bemessen sind, als die langen Begrenzungsseiten der Kammer.

Nach der Erfindung besteht gemäß Anspruch 10 schließlich noch die besonders vorteilhafte Möglichkeit, daß der Schieber in der Kammer jeweils durch den Strömungsdruck einer einzelnen Kunststoffkomponente umstellbar ist, und zwar nachdem die Zufuhr der vorher benutzten Komponente unterbrochen ist.

Weitere Merkmale und Vorteile des Gegenstandes der Erfindung werden nachfolgend an in der Zeichnung dargestellten Ausführungsbeispielen erläutert: Hierbei zeigen

Figur 1 im Längsschnitt den vorderen Teilabschnitt einer Spritzdüse mit Düsenmundstück und zugehöriger Schiebersteuerung,

Figur 2 einen Schnitt entlang der Linie II-II in Fig.1,

Figur 3 einen Schnitt entlang der Linie III-III in Fig, 2 durch die Spritzdüse nach Fig. I,

Figur 4 einen Schnitt entlang der Linie IV-IV in Fig.1,

Figur 5 ein Funktions-Schaubild der Schiebersteuerung nach den Fig. I bis 4 mit den drei möglichen Schieberstellungen,

Figur 6 ein Arbeitsdiagramm zum Funktionsschaubild der Schiebersteuerung nach Fig. 5 bei getrennt aufeinanderfolgender Zufuhr der drei Kunststoffkomponenten,

Figur 7 ein der Fig. 6 ähnliches Arbeitsdiagramm, jedoch mit sich zweiteilig überlappender Zufuhr von jeweils zwei Kunststoffkomponenten,

Figur 8 ein Funktions-Schaubild einer gegenüber der Fig. 5 baulich abgewandelten Schiebersteuerung mit den drei möglichen Schieberstellungen,

Figur 9 wiederum ein Funktions-Schaubild einer gegenüber Fig. 5 abgewandelten Bauart einer Schiebersteuerung mit den drei möglichen Schieberstellungen,

Figur 10 das Funktions-Schaubild einer vierten möglichen Bauform für die Schiebersteuerung mit den drei möglichen Schieberstellungen und

Figur 11 im Querschnitt ein mit einer Spritzdüse nach den Figuren I bis 4 hergestelltes Formteil.

Aus den Fig. I und 3 der Zeichnung ist das vordere Teilstück einer Spritzdüse I zur Herstellung von Formteilen aus drei verschiedenen Kunststoffkomponenten ersichtlich. Diese Spritzdüse I trägt dabei am vorderen Ende ihres Düsengehäuses 2 eine Platte 3 mit dem eingearbeiteten Düsenmundstück 4.

Die Rückseite der Platte 3 schließt dabei nach vorne eine in das Stirnende des Gehäuses 2 eingearbeitete flache Kammer 5 ab, in der ein Flachschieber 6 ver stellbar gehalten ist. In den im wesentlichen parallel zur Längsachse 7-7 des Düsenmundstücks 4 liegenden Wänden 5a, 5b und 5c der Flachkammer 5 mündet je ein Zuführkanal 8a, 8b und 8c für drei verschiedene Kunststoffkomponenten aus, wie das deutlich den Fig. I bis 3 entnommen werden kann.

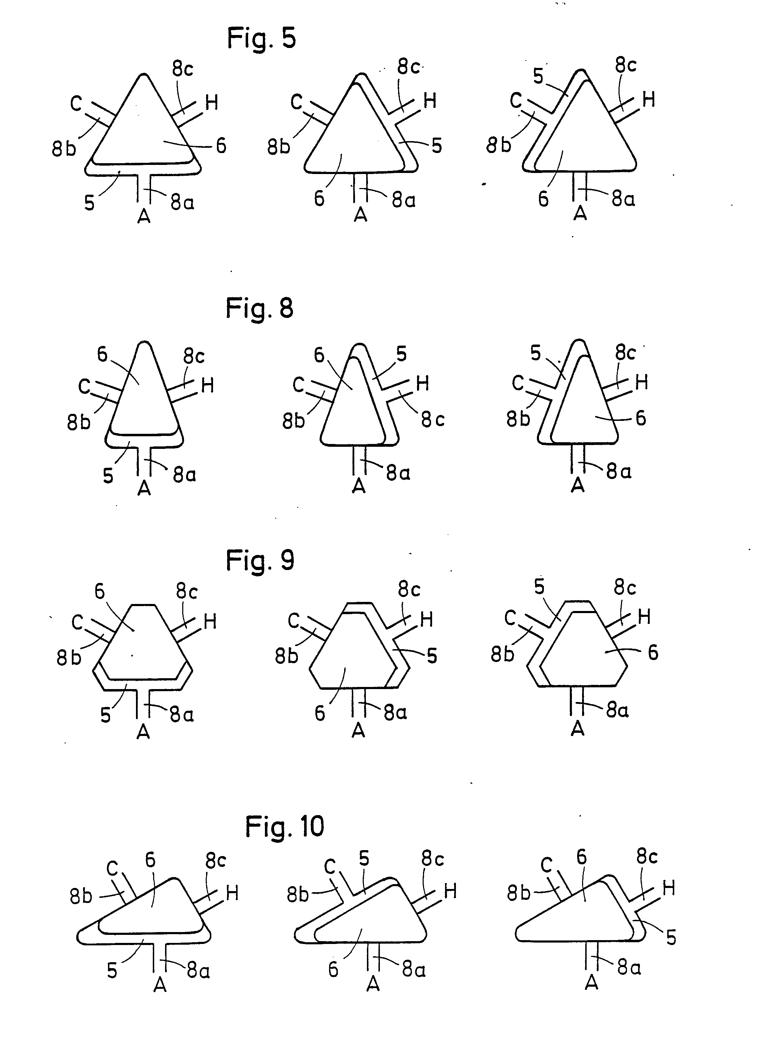

Der Flachschieber 6 ist in der Kammer 5 im wesentlichen quer zur Längsachse 7-7 des Düsenmundstücks 4 begrenzt verstellbar geführt, wobei er sich in drei verschiedene Schaltstellungen bringen läßt, die in Fig. 5 der Zeichnung schematisch vereinfacht dargestellt sind.

Beim Ausführungsbeispiel der Spritzdüse I nach den Fig. I bis 5 hat einerseits die Flachkammer 5 die Umrißformen eines gleichschenkligen Dreiecks mit abgerundeten Ecken. Andererseits ist aber auch der Flachschieber 6 in seiner Umrißform als gleichschenkliges Dreieck ausgeführt. Er unterscheidet sich dabei von der Umrißform der Flachkammer 5 im Grunde genommen nur dadurch, daß seine Seitenlängen jeweils um den Verstellweg kürzer bemessen sind als die zugehörigen Seitenlängen der Flachkammer 5. Auch der Flachschieber 6 hat also drei parallel zur Längsachse 7-7 des Düsenmundstücks 4 verlaufende Begrenzungsflächen 6a, 6b und 6c, wie dies den Fig. I bis

3 ohne weiteres entnommen werden kann. Die Begrenzungsflächen 6a bis 6c des Flachschiebers 6 können wechselweise mit den zugeordneten Begrenzungsflächen 5a bis 5c der Flachkammer 5 in und außer Kontaktberührung gebracht werden. Durch den Berührungskontakt zwischen den Begrenzungsflächen 5a bis 5c der Flachkammer 5 und der Begrenzungsflächen 6a bis 6c des Flachschiebers 6 können die darin ausmündenden Zuführkanäle 8a bis 8c abgesperrt werden.

Ist eine der Begrenzungsflächen 6a bis 6c des Flachschiebers 6 jedoch von der zugehörigen Begrenzungsfläche 5a bis 5c der Flachkammer 5 abgehoben, dann wird jeweils der daran ausmündende Zuführkanal 8a bis 8c in die Flachkammer 5 hinein freigegeben.

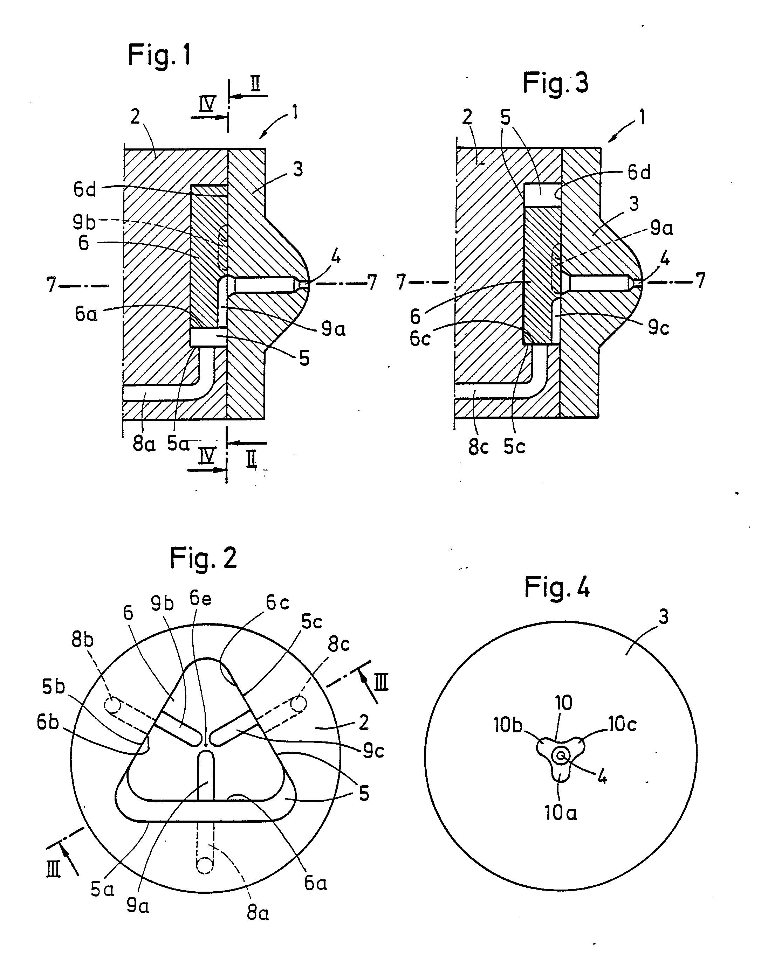

Gemäß den Fig. I und 2 ist die Begrenzungsfläche 6a des Flachschiebers 6 von der Begrenzungsfläche 5a der Flachkammer 5 abgehoben, so daß in diesem Falle der Zuführkanal 8a in die Flachkammer 5 hinein freigegeben ist. Zugleich sind jedoch die beiden anderen Zuführkanäle 8b und 8c gegen die Flachkammer 5 hin abgesperrt. Die Schaltstellung des Flachschiebers 6 nach den Fig. I und 2 entspricht der linken Schaltstellung nach Fig. 5. Die Schaltstellung des Flachschiebers 6 nach Fig. 3 entspricht hingegen der rechten Schaltstellung nach Fig. 5. Dort ist dann der Zuführkanal 8b in die Flachkammer 5 hinein freigegeben, während zugleich die beiden anderen Zuführkanäle 8a und 8c gegen die Kammer hin abgesperrt sind.

In der mittleren Schaltstellung des Flachschiebers nach Fig. 5 wird schließlich der Zuführkanal 8c in die Flachkammer 5 hinein freigegeben, während andererseits die beiden Zuführkanäle 8a und 8b gegen diese Flachkammer 5 abgesperrt sind.

Ein wichtiges Ausgestaltungsmerkmal einer Spritzdüse I liegt noch darin, daß am Flachschieber 6 zu jedem der Zuführkanäle 8a, 8b und 8c auch ein eigener Anschlußbzw. Verbindungskanal 9a, 9b und 9c ausgebildet ist, wie das die Fig. I bis 3 erkennen lassen.

Als besonders vorteilhaft und einfach hat es sich dabei erwiesen, wenn die Anschlußund Verbindungskanäle 9a, 9b und 9c unmittelbar in die Seitenfläche 6b des Flachschiebers 6 eingeformt sind, die der Rückseite der Platte 3 zugewendet ist, in der sich das Düsenmundstück 4 befindet. Die Anschluß-bzw. Verbindungskanäle 9a bis 9c können dabei etwa halbrunden Querschnitt haben und so gelegt werden, daß sie sich insgesamt in einer anderen Ebene innerhalb der Flachkammer 5 befinden als die Mündungsöffnung der Zuführkanäle 8a bis 8c. Diese Ausbildung ist deutlich aus den Fig. I bis 3 der Zeichnung ersichtlich. Es kann auf diese Art und Weise erreicht werden, daß der Flachschieber 6 und die Flachkammer 5 nur mit einer Dicke bzw. Tiefe ausgebildet werden müssen, die geringfügig größer ist als die in verschiedenen Ebenen liegenden Durchlaßquerschnitte der Zuführkanäle 8a bis 8c und der Anschlußbzw. Verbindungskanäle 9a bis 9c.

Es sei hier darauf hingewiesen, daß das Flächenzentrum der Flachkammer 5 im Gehäuse 2 der Spritzdüse I so gelegt ist, daß es sich in Fluchtlage mit der Längsachse 7-7 des Düsenmundstücks 4 in der Platte 3 befindet.

Während die Anschluß-bzw. Verbindungskanäle 9a bis 9c jeweils mit ihrem einen Ende an der zugehörigen Begrenzungsfläche 6a bis 6c des Flachschiebers 6 ausmünden, reichen die inneren Enden derselben jeweils dicht bis an das Flächenzentrum 6e des Flachschiebers 6 heran, wie das in Fig. 2 der Zeichnung zu sehen ist. Da andererseits die Umrißabmessungen des Flachschiebers 6 um den jeweiligen Verschiebeweg kleiner ausgeführt sind als die Umrißabmessungen der Flachkammer 5, kann das innere Ende jedes einzelnen Anschluß-bzw. Verbindungskanales 9a bis 9c für sich allein mit dem Düsenmundstück 4 in Strömungsverbindung gestellt werden. Bei der Schieberstellung nach Fig. 2 bzw. nach der linken Abbildung der Fig. 5 steht also das innere Ende des Anschluß-bzw. Verbindungskanals 9a mit dem Düsenmundstück 4 in Strömungsverbindung.

Bei der Schieberstellung nach der mittleren Abbildung der Fig. 5 ist das innere Ende des Anschluß-bzw. Verbindungskanals 9b mit dem Düsenmundstück 4 in Deckungslage gebracht, während bei der Schieberstellung nach der rechten Abbildung der Fig. 5 das innere Ende des Anschluß-bzw. Verbindungskanals 9c mit dem Düsenmundstück 4 korrespondiert.

Bei der aus den Fig. I bis 3 ersichtlichen Ausbildung der Spritzdüse I ergibt sich eine Arbeitsweise, die in dem Diagramm nach Fig. 6 dargestellt ist. Zunächst wird hier bspw. die Kunststoffkomponente A durch den Zuführkanal 8a sowie den Anschluß-bzw. Verbindungskanal 9a zum Düsenmundstück 4 geführt. Nachdem der Zuführkanal 8a und Anschluß-bzw. Verbindungskanal 9a dann durch entsprechende Verstellung des Flachschiebers 6 abgesperrt sind, wird nunmehr über den Zuführkanal 8b und den Anschluß-bzw. Verbindungskanal 9b die Kunststoffkomponente H dem Düsenmundstück 4 zugeleitet. Nachdem auch die Zufuhr dieser Kunststoffkomponente H durch entsprechende Verstellung des Flachschiebers 6 im Bereich des Zuführkanals 8b und des Anschlußbzw. Verbindungskanals 9b abgesperrt ist, werden der Zuführkanal 8c sowie der Anschluß-bzw. Verbindungskanal 9c freigegeben, woraufhin dann die Kunststoffkomponente C zum Düsenmundstück 4 hin gelangt.

Aus Fig. 6 ist dabei erkennbar, daß jeweils nach der Beendigung der Zufuhr der einen Kunststoffkomponente ein geringfügiger Zeitraum vergeht, bis die Zufuhr der jeweils nächsten Kunststoffkomponente einsetzt.

Wie Fig. 7 zeigt, ist es aber auch möglich, die Anordnung so zu treffen, daß die Zufuhr der einen Kunststoffkomponente erst völlig unterbrochen wird, nachdem die Zufuhr der nächsten Kunststoffkomponente bereits während eines gewissen Zeitraums gleichzeitig stattgefunden hat. Es ist hier also gewissermaßen eine überlappte Zuführung zweier verschiedener Kunststoffkomponenten zum Düsenmundstück 4 hin vorgesehen. Diese Möglichkeit kann durch eine entsprechend abgestimmte Ausbildung der einander zugewendeten inneren Enden der Anschluß-bzw. Verbindungskanäle 9a bis 9c erreicht werden, bspw. dadurch, daß diese gegen das Flächenzentrum 6e des Flachschiebers 6 hin nur durch sehr dünne Wandstege gegeneinander abgesperrt sind. Eine andere Möglichkeit besteht jedoch darin, in die Rückseite der mit dem Düsenmundstück versehenen Platte 3 eine sternförmige Leitfläche 10 einzuarbeiten, die hier drei in gleichmäßigem Winkelabstand - 120° - zueinander angeordnete Leitflächen-Arme 10a, 10b und 10c hat. Diese Arme 10a bis 10c sind dabei so bemessen, daß im Verlauf der Verstellbewegung des Flachschiebers 6 zeitweilig zwei derselben gleichzeitig mit den ihnen benachbarten Anschluß-bzw. Verbindungskanälen 9a bis 9c des Flachschiebers 6 in Strömungsverbindung stehen. Erst wenn der Flachschieber 6 in seine jeweilige Endstellung gelangt ist, steht dann nur noch einer der Anschluß-bzw. Verbindungskanäle 9a bis 9c desselben mit dem Düsenmundstück 4 in Strömungsverbindung.

In Fig. 8 der Zeichnung ist eine abgewandelte Bauart der Schiebersteuerung für eine Spritzdüse gezeigt.

Auch hier hat die Flachkammer 5 grundsätzlich die Form eines Dreiecks. Es handelt sich hierbei jedoch im Gegensatz zu der Bauform nach den Fig. 2 und 5 um ein ungleichseitiges Dreieck. Die Anordnung der Zuführ kanäle 8a bis 8c an den Begrenzungsflächen der Flachkammer 5 ist auch in diesem Falle so getroffen, daß in jeder möglichen Schaltstellung des Flachschiebers 6 immer nur einer dieser Zuführkanäle 8a bis 8c freigegeben ist, während die beiden anderen Zuführkanäle 8a bis 8c abgesperrt sind.

Bei dem Ausführungsbeispiel einer Schiebersteuerung nach Fig. 9 haben die Flachkammer 6 und der Flachschieber 5 jeweils eine hexagonförmige Umrißgestalt mit sich einander abwechselnden langen und kurzen Begrenzungsseiten. Den drei langen Begrenzungsseiten der Flachkammer 5 sind hierbei jeweils die Mündungen der Zuführkanäle 8a bis 8c zugeordnet, während die drei langen Bewgrenzungsseiten des Flachschiebers 6 die zugehörigen Absperrorgane bilden. Diese lange Begrenzungsseiten des Flachschiebers 6 sind dabei jeweils um dessen Verstellweg kürzer bemessen als die langen Begrenzungsseiten der Flachkammer 5. Die kurzen Begrenzungsseiten der Flachkammer 5 und die kurzen Begrenzungsseiten des Flachschiebers 6 sind hier maßlich so aufeinander abgestimmt, daß sie in den drei möglichen verschiedenen Schieberstellungen jeweils passend zueinander in Berührungskontakt gelangen können.

In Fig. 10 ist schließlich noch gezeigt, daß sowohl die Flachkammer 5 als der Flachschieber 6 in Form eines ungleichschenkligen Dreiecks ausgeführt werden können, wenn die Abmessungen des Flachschiebers 6 so vorgesehen sind, daß er in jeder der drei möglichen Schaltstellungen nur einen der Zuführkanäle 8a bis 8c freigibt, während er jeweils zwei andere dieser Zuführkanäle 8a bis 8c absperrt.

Die vorstehend beschriebene Ausgestaltung einer Schiebersteuerung für Spritzdüsen zur Herstellung von Formteilen aus drei verschiedenen Kunststoffkomponenten ist nicht nur zur mechanischen Betätigung des Flachschiebers zum Zwecke seiner Verstellung geeignet. Vielmehr ist auch eine Ausbildung möglich, bei welcher der Flachschieber 6 in der Flachkammer 5 jeweils durch den Strömungsdruck einer einzelnen Kunststoffkomponente umstellbar ist, und zwar einfach dadurch, daß die Zufuhr der vorher eingeleiteten Kunststoffkomponente unterbrochen wird.

Es liegt auf der Hand, daß unter Benutzung der vorstehend beschriebenen Maßnahmen baulich einfache und räumlich kleine Spritzdüsen geschaffen werden können, die nur kleine Volumina von Kunststoffkomponenten zwischen dem Düsenmundstück 4 und den Zuführkanälen 8a bis 8c aufweisen, dabei aber ein exaktes Umschalten von einer auf die andere Kunststoffkomponente gewährleisten und eine sehr schnelle Reaktion ermöglichen.

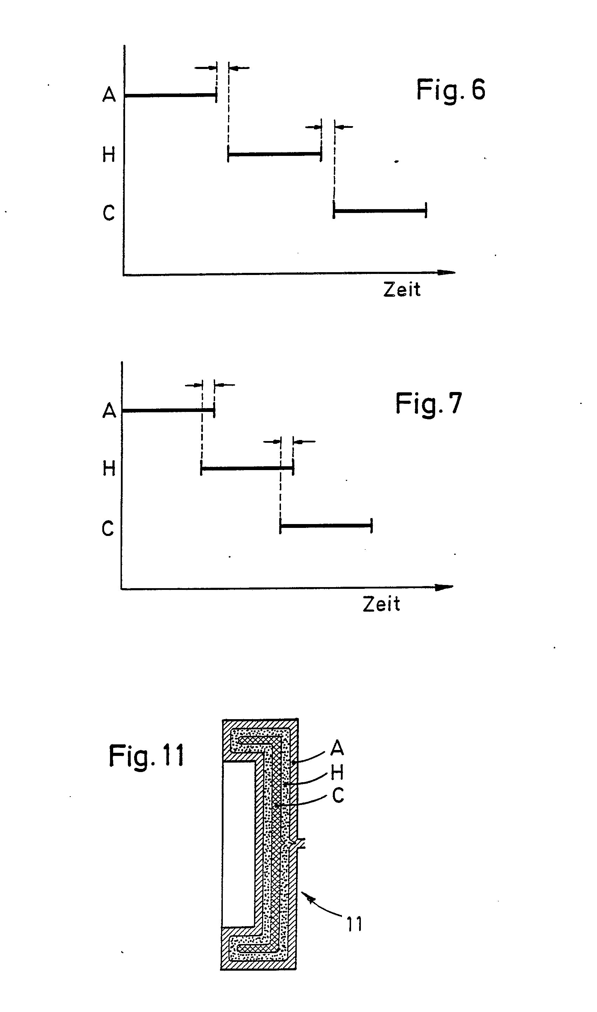

In Fig. 11 der Zeichnung ist ein Formteil dargestellt, welches bspw. mit Hilfe von Spritzdüsen 1 nach den Fig. 1 bis 5 bzw. 8 bis 10 hergestellt werden kann. Dieses Formteil 11 hat dabei bspw. fünf Schichten, die aus den Kunststoffkomponenten A, H und C gebildet sind. Die Kunststoffkomponente A bildet dabei zwei Außenschichten, während durch die Kunststoffkomponente H zwei Zwischenschichten gebildet sind und die Kunststoffkomponente C eine mittlere Barriereschicht schafft. Die aus der Kunststoffkomponente H bestehenden Zwischenschichten bilden dabei den Haftvermittler zwischen der von der Kunststoffkomponente H gebildeten Außenhaut und der von der Kunststoffkomponente C gebildeten Barriereschicht.

## Ansprüche

I. Spritzdüse zur Herstellung von Formteilen aus drei verschiedenen Kunststoffkomponenten, bei welcher die Zuführkanäle für jede der Kunststoffkomponenten vor dem Düsenmundstück durch Düsenverschlüsse beeinflußbar sind,

**dadurch gekennzeichnet,**

daß die Zuführkanäle (8a bis 8c) im Düsenkopf (I) relativ zueinander an drei verschiedenen im wesentlichen parallel zur Längsachse (7-7) des Düsenmundstücks (I) liegenden Wänden (5a bis 5c) einer in ihrer Grundform etwa dreieckig begrenzten Kammer (5) ausmünden,

daß in der Kammer (5) im wesentlichen quer zur Längsachse (7-7) des Düsenmundstücks (4) begrenzt verstellbar ein in seiner Grundform entsprechend gestalteter Schieber (6) geführt ist,

daß dieser Schieber (6) in der Kammer (5) relativ zu den Mündungen der Zuführkanäle (8a bis 8c) in drei verschiedene Schaltstellungen bewegbar ist (Fig. 5), von denen jede jeweils eine der Mündungen der Zuführkanäle (8a bis 8c) freigibt, zugleich aber zwei andere Mündungen von Zuführkanälen (8a bis 8c) verschließt,

und daß am Schieber (6) zu jedem der Zuführkanäle (8a bis 8c) ein eigener Anschluß-bzw. Verbindungskanal (9a bis 9c) ausgebildet ist, dessen eines Ende lediglich dann mit dem Düsenmundstück (4) korrespondiert, wenn sein anderes Ende mit dem zugehörigen Zuführkanal (8a bis 8c) in Verbindung gestellt ist (Fig. 5).

2. Spritzdüse nach Anspruch I,

**dadurch gekennzeichnet,**

daß die Kammer (5) als Flachkammer und der Schieber (6) als Flachschieber ausgeführt sind und sich unmittelbar rückseitig an das Düsenmundstück anschließen, wobei vorzugsweise das Flächenzentrum der Kammer (5) mit der Längsachse (7-7) des Düsenmundstücks (4) fluchtet.

3. Spritzdüse nach einem der Ansprüche I und 2,

**dadurch gekennzeichnet,**

daß die Anschluß-bzw. Verbindungskanäle (9a bis 9c) unmittelbar in die dem Düsenmundstück (4) zugewendete Stirnfläche (6d) des Schiebers (6) eingeformt sind, wobei ihr äußeres Ende an einer Randkante (6a bis 6c) des Schiebers (6) in die Kammer (5) ausmündet, während ihr inneres Ende einen dem Stellweg des Schiebers (6) angepaßten Abstand vom Flächenzentrum (6e) des Schiebers (6) aufweist (Fig. 2).

4. Spritzdüse nach einem der Ansprüche I bis 3,

**dadurch gekennzeichnet,**

daß die Zuführkanäle (8a bis 8c) in die Kammer (5) in einer zur Verstellebene des Schiebers (6) parallelen Ebene ausmünden, die gegenüber der dazu wiederum parallelen Mündungsebene der Anschluß-bzw. Verbindungskanäle (9a bis 9c) im Schieber (6) parallelversetzt ist, und daß dabei die Strömungsverbindung zwischen jedem Zuführkanal (8a bis 8c) und dem zugehörigen Anschluß bzw. Verbindungskanal (9a bis 9c) über den vom Schieber (6) freigebbaren Raum der Kammer (5) herstellbar ist (Fig. I).

5. Spritzdüse nach einem der Ansprüche I bis 4,

**dadurch gekennzeichnet,**

daß die im wesentlichen parallel zur Längsachse (7-7) des Düsenmundstücks (4) gerichteten Begrenzungswandungen (5a bis 5c) der Kammer (5) auf Ebenen liegen, die miteinander ein gleichseitiges Dreieck einschließen (Fig. 2 und 5).

6. Spritzdüse nach einem der Ansprüche I bis 4,

**dadurch gekennzeichnet,**

daß die im wesentlichen parallel zur Längsachse (7-7) des Düsenmundstücks (4) gerichteten Begrenzungswandungen (5a bis 5c) der Kammer (5) auf Ebenen liegen, die miteinander ein ungleichseitiges Dreieck einschließen (Fig. 8).

7. Spritzdüse nach einem der Ansprüche I bis 4,

**dadurch gekennzeichnet,**

daß die im wesentlichen parallel zur Längsachse (7-7) des Düsenmundstücks (4) gerichteten Begrenzungswandungen (5a bis 5c) der Kammer (5) auf Ebenen liegen, die miteinander ein ungleichschenkliges Dreieck einschließen.

8. Spritzdüse nach einem der Ansprüche I bis 7,

**dadurch gekennzeichnet,**

daß die Kammer (5) und der Schieber (6) jeweils abgerundete Ecken haben, wobei die Seitenlängen des Schiebers (6) um dessen Verstellweg kürzer bemessen sind als die Seitenlängen der Kammer (Fig. 2 und 5).

9. Spritzdüse nach einem der Ansprüche I bis 5,

**dadurch gekennzeichnet,**

daß die Kammer (5) und der Schieber (6) jeweils hexagonförmig mit abwechselnd langen und kurzen Begrenzungsseiten gestaltet sind, wobei die langen Begrenzungsseiten des Schiebers (6) jeweils um dessen Verstellweg kürzer bemessen sind, als die langen Begrenzungsseiten der Kammer (5; Fig. 9).

I0. Spritzdüse nach einem der Ansprüche I bis 9,

**dadurch gekennzeichnet,**

daß der Schieber (6) in der Kammer (5) jeweils durch den Strömungsdruck einer einzelenen Kunststoffkomponente umstellbar ist.

29. 3. 8ϵ

# Fig. 1

# Fig. 3

# Fig. 2

# Fig. 4

## Fig. 5

## Fig. 8

## Fig. 9

## Fig. 10

Fig. 6

Fig. 7

Fig. 11